# EUROPÄISCHE PATENTSCHRIFT

(11) **EP 1 958 561 B1**
(45) Veröffentlichungstag und Bekanntmachung des Hinweises auf die Patenterteilung: **19.06.2013**
(21) Anmeldenummer: 08007722.5
(22) Anmeldetag: 09.12.2005
(51) Int. Cl.: A47L 9/14, B01D 46/02, B01D 46/00

(54) **Staubsaugerfilterbeutel**
Vacuum cleaner filter bag
Sac d'aspirateur

(30) Priorität: 22.11.2005 EP 05025480
(43) Veröffentlichungstag der Anmeldung: 20.08.2008
(62) Teilanmeldung aus: 05027013.1
(73) Patentinhaber: Eurofilters Holding N.V., 3900 Overpelt (BE)
(72) Erfinder: Sauer, Ralf, c/o Eurofilters Holding N.V., 3900 Overpelt (BE); Schultink, Jan, c/o Eurofilters Holding N.V., 3900 Overpelt (BE)
(74) Vertreter: Reitzle, Helmut

(56) Entgegenhaltungen:
- BE-A- 529 649
- DE-A1- 10 203 460
- DE-U1- 8 801 638
- DE-U1- 8 811 821
- DE-U1- 9 101 981
- GB-A- 815 709
- US-A- 2 068 332
- US-A- 3 370 405
- US-A- 4 469 498
- US-A- 5 603 741

## Beschreibung

Die Erfindung betrifft einen Staubsaugerfilterbeutel mit verbesserten Filtereigenschaften und einer erhöhten Standzeit.

Aus dem Stand der Technik sind verschiedene Arten von Staubsaugerbeuteln bekannt, die in unterschiedlicher Art und Weise versuchen, gute Filtereigenschaften und eine lange Standzeit bereitzustellen.

Aus der GB 815 709 ist ein Staubsaugerfilterbeutel gemäß dem Oberbegriff des Anspruchs 1 bekannt.

Aus der EP 0 960 645 ist es beispielsweise bekannt, einen Staubsaugerfilterbeutel mit einer Filterstruktur bereitzustellen, bei der in Richtung des Luftstroms aus dem Beutelinnern nach Außen ein Grobfilter vor einem Feinfilter angeordnet ist. Der Grobfilter weist eine hohe Staubspeicherkapazität auf, sodass Staubpartikel in seinen Poren über die gesamte Dicke eingelagert werden. Auf diese Weise wird ein Verstopfen des Filtermaterials verzögert und damit die Standzeit des Beutels erhöht.

Aus der WO 93/21812 ist ein Staubsaugerfilterbeutel bekannt, bei dem auf der der Eingangsöffnung gegenüberliegenden Beutelwand eine Schutzschicht aus einem widerstandsfähigen Material vorgesehen ist. Dadurch wird verhindert, dass die der Einlassöffnung des Beutels gegenüberliegende Beutelwand durch die mit hoher Geschwindigkeit direkt auftreffenden Partikel beschädigt wird.

Aus der US 4,469,498 ist ein Staubfilterbeutel mit einer Einlassöffnung bekannt, der im Inneren des Staubfilterbeutels einen Schmutzabweiser aufweist, der über ein Verbindungsstück mit dem Einlass verbunden ist.

In der BE 529 649 wird lediglich eine Verschlussvorrichtung beschrieben, wonach es wünschenswert ist, dass die geöffnete Verschlussvorrichtung möglichst wenig in den Luftstrom hineinragt, um einen Leistungsverlust durch ein Anströmen der Verschlussvorrichtung zu vermeiden.

Aus der DE 91 01 981 U1, aus der US 3,370,405 A und der US 2,068,332 A1 sind weitere spezifische Ausgestaltungen von Staubfilterbeuteln bekannt.

Eine höhere Standzeit eines Staubfilterbeutels ist allerdings mit diesen Lösungen nicht erreichbar.

Die Aufgabe der vorliegenden Erfindung besteht darin, angesichts der aus dem Stand der Technik bekannten Beutel einen verbesserten Staubsaugerfilterbeutel bereitzustellen, der eine erhöhte Standzeit bei sehr guten Filtrationseigenschaften aufweist.

Diese Aufgabe wird gelöst durch einen Staubsaugerfilterbeutel gemäß Anspruch 1.

Erfindungsgemäß wird ein Staubsaugerfilterbeutel mit einer Einlassöffnung und einer im Bereich der Einlassöffnung angeordneten Ablenkvorrichtung, die derart ausgebildet ist, dass ein durch die Einlassöffnung eintretender Luftstrom ablenkbar ist, bereitgestellt.

Es hat sich überraschenderweise herausgestellt, dass die Standzeit eines derartigen Staubsaugerfilterbeutels bei hervorragenden Filtereigenschaften signifikant erhöht ist. Insbesondere wurde festgestellt, dass der sich in einem Filterbeutel bildende Filterkuchen erheblich zum Filtrationsverhalten des Filterbeutels beiträgt. Durch die erfindungsgemäß vorgesehene Ablenkvorrichtung wird ein durch die Einlassöffnung eintretender Luftstrom abgelenkt, so dass die mitgeführten Partikel gleichmäßig im Beutelinnern verteilt werden und folglich eine gleichmäßige Verteilung des sich bildenden Filterkuchens und damit eine erhöhte Standzeit erhalten wird.

Die Ablenkvorrichtung hat weiterhin den Vorteil, dass die im Luftstrom mitgeführten Partikel nicht ungehindert und mit großer Geschwindigkeit auf die der Einlassöffnung gegenüberliegende Beutelwand prallen und diese zerstören.

Erfindungsgemäß ist die Ablenkvorrichtung im Beutelinneren an der Einlassöffnung angeordnet. Hierdurch kann die Ablenkvorrichtung auf besonders einfache Weise mit dem Staubsaugerfilterbeutel verbunden werden. So ist es möglich, die Ablenkvorrichtung auf der Innenseite des Staubsaugerfilterbeutels durch eine Klebeverbindung anzuordnen. Insbesondere wenn der Staubsaugerfilterbeutel eine flache Form haben soll, ermöglicht diese Weiterbildung eine produktionstechnisch sehr günstig Herstellung.

Erfindungsgemäß ist die zuvor beschriebene Ablenkvorrichtung zum Aufteilen des Luftstroms in wenigstens zwei Teilströme mit unterschiedlichen Strömungsrichtungen ausgebildet.

Durch eine derartige Aufteilung in zwei oder mehr Teilströme wird eine noch gleichmäßigere Verteilung des Filterkuchens erreicht. Außerdem ist die Zahl der Partikel pro Teilchenstrom im Vergleich mit dem eintretenden Luftstrom verringert, was die Belastung der Beutelwände durch die einzelnen Teilströme reduziert.

Die Ablenkvorrichtung der beschriebenen Filterbeutel kann die Einlassöffnung wenigstens teilweise umgebend an der Beutelinnenseite befestigt sein. Damit wird insbesondere eine stabile Anordnung der Ablenkvorrichtung erhalten, die auch bei hohen Strömungsgeschwindigkeiten ihre Aufgabe zuverlässig erfüllen kann.

Insbesondere kann die Ablenkvorrichtung wenigstens eine der Einlassöffnung gegenüberliegende Ablenkfläche umfassen. Durch wenigstens eine derartige Ablenk- oder Prallfläche lässt sich insbesondere die Geschwindigkeit der Partikel in geeigneter Weise reduzieren. Der Abstand bzw. der mittlere Abstand einer derartigen Ablenkfläche von der Einlassöffnung hängt von der Größe und Form des Staubsaugerfilterbeutels ab.

Die wenigstens eine Ablenkfläche kann in einem vorherbestimmten Winkel relativ zur Ebene der Einlassöffnung, insbesondere parallel zur Ebene der Einlassöffnung, angeordnet sein.

Durch eine geeignete Wahl des Winkels kann die Ablenkung des Luftstroms an unterschiedliche Parameter wie Beutelgeometrie bzw. -dimensionierung, Einströmwinkel angepasst und optimiert werden. Bei einer parallel zur Ebene der Einlassöffnung angeordneten Ablenkfläche wird eine senkrecht zur Ebene der Einlassöffnung einströmende Luftströmung um etwa 90° umgelenkt, was eine günstige Verteilung der Partikel und des daraus resultierenden Filterkuchens zur Folge hat.

Vorzugsweise kann die wenigstens Ablenkfläche eine größere Fläche als die Fläche der Eintrittsöffnung aufweisen. Damit wird weitestgehend vermieden, dass der Luftstrom lediglich um die Ablenkfläche herumgelenkt wird und danach aber mit im Wesentlichen unveränderter Strömungsgeschwindigkeit auf die der Einlassöffnung gegenüberliegende Seite trifft. Jede Ablenkfläche kann eine Fläche von 15 bis 100 cm², insbesondere 40 bis 60 cm² aufweisen.

Die Ablenkvorrichtung der zuvor beschriebenen Staubsaugerfilterbeutel kann in einer Weiterbildung zwei trapezförmige oder rechteckige Ablenkflächen aufweisen, die, ausgehend von der Einlassöffnung, keilförmig aufeinander zulaufen und an einer der Einlassöffnung gegenüberliegenden Verbindungskante miteinander verbunden sind.

Insbesondere kann eine derartige Ablenkvorrichtung weiterhin an wenigstens einem Ende der Verbindungskante eine Ausströmöffnung und einen die Einlassöffnung umgebenden und mit der Beutelinnenseite verbundenen Bereich, der nach Art eines Klotzbodens ausgebildet ist und eine Einströmöffnung aufweist, umfassen.

Auf diese Weise können aus dem Staubsaugerbeutelbereich bekannte Klotzbodenformen, wie sie beispielsweise in der DE 100 64 608 beschrieben sind, (in verkleinerter Form) als Ablenkvorrichtungen eingesetzt werden, wobei im vorliegenden Fall in einer der oder bei den dreieckigen Seiten, nämlich am Ende der Verbindungskante, eine Ausströmöffnung vorgesehen ist. Es ist zu betonen, dass die Form der Ablenkvorrichtung unabhängig von der Form des Staubfilterbeutels gewählt wird; somit muss der Staubfilterbeutel selbst keine Klotzbodenform aufweisen, selbst wenn diese für die Ablenkvorrichtung vorgesehen ist.

Die Ablenkvorrichtung der zuvor beschriebenen Staubsaugerfilterbeutel kann in einer alternativen Weiterbildung die Form eines Quaders aufweisen, der in einer ersten, die Einlassöffnung umgebenden und mit der Beutelinnenseite verbundenen Seitenfläche eine Einströmöffnung und in wenigstens einer senkrecht zu der ersten Seitenfläche stehenden weiteren Seitenfläche eine Ausströmöffnung aufweist.

Durch die Quaderform wird ein stabiler Aufbau der Ablenkvorrichtung erzielt, wobei gleichzeitig eine geeignete Ablenk- oder Prallfläche zur Umlenkung des Luftstroms durch die der Einströmöffnung gegenüberliegende Seitenfläche des Quaders gebildet wird. Dabei kann insbesondere jede Ausströmöffnung die gesamte Seitenfläche des Quaders einnehmen. Damit wird vermieden, dass sich in einer Ecke des Quaders eingesaugte Staubpartikel ansammeln.

Bei einer in Form eines Quaders vorgesehenen Ablenkvorrichtung können insbesondere wenigstens zwei gegenüberliegende Ausströmöffnungen vorgesehen sein.

Durch diese wenigstens zwei gegenüberliegende Ausströmöffnungen wird einerseits erreicht, dass der Luftstrom in zwei Teilströme aufgeteilt wird, und andererseits diese zwei Teilströme entgegengesetzte Richtungen aufweisen, was insgesamt zu einer sehr homogenen Verteilung des Filterkuchens im Staubsaugerfilterbeutel führt.

Die Ablenkvorrichtung der zuvor beschriebenen Staubsaugerfilterbeutel kann in einer Weiterbildung derart ausgebildet ist, dass sie in einer ersten Stellung eine im Vergleich zu einer zweiten Stellung kleinere Ausdehnung senkrecht zur Ebene der Einlassöffnung aufweist.

Dies bedeutet, dass die Ablenkvorrichtung zusammenlegbar ist. Durch die kleinere Ausdehnung in der zweiten Stellung lässt sich der Staubsaugerfilterbeutel, insbesondere vor dem Gebrauch, in eine sehr kompakte Form bringen. Dies ist bei Flachbeuteln von besonderem Vorteil, die sich zum Verpacken auf bestimmte Formate zusammenfalten lassen. Durch derartige zusammenlegbare Ablenkvorrichtungen lässt sich vermeiden, dass die Dicke der zusammengelegten Beutel wesentlich erhöht wird. Vorzugsweise kann die Ablenkvorrichtung in der zweiten Stellung im wesentlichen flach ausgebildet sein.

Insbesondere kann die Ablenkvorrichtung derart ausgebildet sein, dass sie durch einen Saugluftstrom von der ersten Stellung in die zweite Stellung bringbar ist.

Damit kann der Beutel während des Transports eine Ablenkvorrichtung in der zweiten Stellung mit kleinerer Ausdehnung aufweisen, die dann im Betrieb des Filterbeutels im Staubsauger beispielsweise durch den aufgrund des durch das Ansaugen von Luft im Beutel entstehenden Unterdrucks in ihre Betriebsstellung übergeht, in der sie dann ihre Ablenkfunktion erfüllt.

Die zuvor beschriebenen Filterbeutel können eine Rückstelleinrichtung aufweisen, die derart ausgebildet ist, dass die Ablenkvorrichtung in Abhängigkeit von einem Saugluftstrom von der zweiten Stellung in die erste Stellung bringbar ist.

Insbesondere kann die Ablenkvorrichtung ein Federelement umfassen, das auf einen Teil der Ablenkvorrichtung eine Rückstellkraft derart ausübt, dass die Ablenkvorrichtung in Abhängigkeit von einem Saugluftstrom von der zweiten Stellung in die erste Stellung bringbar ist.

Ein solches Federelement ermöglicht, dass die Ablenkvorrichtung bei Nachlassen des Saugluftstroms, beispielsweise wenn der Staubsauger ausgeschaltet wird, aus der ersten Stellung wieder in die zweite Stellung mit verringerter Ausdehnung senkrecht zur Ebene der Einlassöffnung übergeht.

Die Ablenkvorrichtung kann Falzlinien aufweisen, so dass die Ablenkvorrichtung von der ersten oder zweiten Stellung in die zweite bzw. erste Stellung bringbar ist. Derartige Falzlinien erlauben das gewünschte Zusammenlegen bzw. -falten in einfacher und zuverlässiger Weise.

Alternativ zu den beschriebenen Weiterbildungen kann die Ablenkvorrichtung allerdings auch starr ausgebildet sein, so dass ein Zusammenlegen nicht möglich ist.

Die zuvor beschriebenen Staubsaugerfilterbeutel können weiterhin ein Dichtungselement, insbesondere zum Abdichten der Einlassöffnung, umfassen.

Mit einem derartigen Dichtungselement kann insbesondere die Einlassöffnung um einen eingeführten Stutzen herum abgedichtet werden.

Das Dichtungselement kann insbesondere zwischen der Einlassöffnung und der Ablenkvorrichtung angeordnet sein. Damit wird sowohl das Anordnen als auch das Befestigen des Dichtungselements vereinfacht. Alternativ kann das Dichtungselement innerhalb der Ablenkvorrichtung angeordnet sein.

Das Material des Dichtungselements kann insbesondere Gummi, ein Elastomer, eine Folie oder einen Schaum, insbesondere einen geschlossenzelligen Schaum, umfassen.

Durch eine geeignete Anordnung des Dichtungselements kann dieses weiterhin eine verbesserte Dichtung der Einlassöffnung beim Verschließen mit der Ablenkvorrichtung ermöglichen.

Die Ablenkvorrichtung der zuvor beschriebenen Staubsaugerfilterbeutel kann insbesondere ein im Wesentlichen luftundurchlässiges Material umfassen. Dies hat den Vorteil, dass der Luftstrom und die mitgeführten Partikel im Wesentlichen vollständig abgelenkt werden, sodass sich insbesondere auf der Ablenkvorrichtung keine Partikelablagerungen bilden.

Das Material der Ablenkvorrichtung umfasst Papier, ein trocken- oder nassgelegtes Vlies oder eine Folie.

Bei den zuvor beschriebenen Staubsaugerfilterbeuteln kann die Ablenkvorrichtung mit dem Filtermaterial insbesondere verklebt oder verschweißt sein. Beispielsweise kann die Ablenkvorrichtung an Verbindungsstellen mit der Beutelinnenseite Polyethylen oder Polypropylen umfassen oder damit beschichtet sein. Dies ermöglicht, die Ablenkvorrichtung und eine diese Materialien umfassende äußere Halteplatte mittels Ultraschallschweißen gleichzeitig am Filtermaterial der Beutelwand zu befestigen.

Weitere Merkmale und Vorteile der Erfindung werden nachfolgend anhand der in den Figuren illustrierten Ausführungsbeispielen gemäß einer ersten konstruktiven Alternative und anhand von nicht unter Bezugnahme auf Figuren beschriebenen Ausführungsbeispielen gemäß einer zweiten konstruktiven Alternative näher erläutert. Hierbei zeigt:
- Figur 1: eine Ansicht eines ersten Ausführungsbeispiels einer Ablenkvorrichtung gemäß der vorliegenden Erfindung;
- Figur 2: einen Querschnitt durch ein weiteres Ausführungsbeispiel einer Ablenkvorrichtung gemäß der vorliegenden Erfindung;
- Figur 3: einen Querschnitt durch ein weiteres Ausführungsbeispiels einer Ablenkvorrichtung gemäß der vorliegenden Erfindung;
- Figur 4: ein Foto mit einem Vergleich eines herkömmlichen Staubsaugerfilterbeutels und eines Staubsaugerfilterbeutels mit einer Ablenkvorrichtung gemäß der vorliegenden Erfindung;
- Figur 5: eine Grafik zur Illustration der verbesserten Filtereigenschaften;
- Figur 6: eine weitere Grafik zur Illustration der verbesserten Filtereigenschaften.

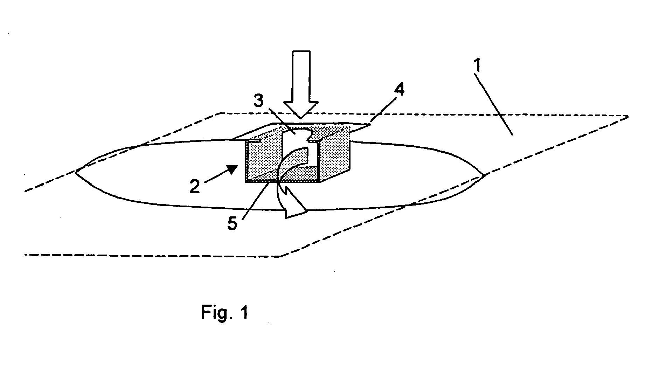

Figur 1 zeigt eine Ansicht eines Ausführungsbeispiels eines erfindungsgemäßen Staubsaugerfilterbeutels.

Der Staubsaugerfilterbeutell ist in dieser Figur lediglich skizzenhaft angedeutet. Im Innern des Filterbeutels ist eine Ablenkvorrichtung 2 an der Einlassöffnung 3 mit der Beutelinnenseite verbunden. An der Außenseite des Beutels ist eine Halteplatte 4 angeordnet, mit der der Filterbeutel in einem Staubsauger fixiert werden kann.

In dem gezeigten Beispiel ist die Ablenkvorrichtung in Form eines Quaders ausgebildet. Die Grundfläche 5 dieses Quaders ist parallel zur Ebene der Einlassöffnung 3 angeordnet und erfüllt die Funktion einer Ablenkfläche oder Prallplatte. Zwei der Seitenflächen senkrecht zur Prallplatte weisen jeweils eine Ausströmöffnung auf (in der gezeigten Ansicht vorne und hinten), die jeweils die gesamte Seitenfläche des Quaders einnehmen. Die beiden anderen Seitenflächen (links und rechts in der gezeigten Ansicht) sind geschlossen. Somit wird ein durch die Einlassöffnung 3 eintretender Luftstrom in zwei Teilströme aufgeteilt, die relativ zur Einströmöffnung um 90° abgelenkt sind und nach hinten bzw. vorne in den Beutel strömen.

Die Abmessungen der quaderförmigen Ablenkvorrichtungen können in dem gezeigten Beispiel 7,5 cm x 8 cm x 3 cm (Breite x Tiefe x Höhe) betragen. Das Material ist Pappe.

Das gezeigte Ausführungsbeispiellässt sich in vielfältiger Weise modifizieren.

Zunächst kann die Ausrichtung der Ablenkvorrichtung anders gewählt werden, indem beispielsweise der Quader um 45° relativ zu einer Achse gedreht ist, die senkrecht auf der Ablenkfläche steht, und durch ihren Mittelpunkt geht. Auf diese Weise können die Teilströme in die Ecken des Beutels gelenkt werden.

Weiterhin ist es möglich, nur in einer oder in drei oder in allen Seitenflächen des Quaders eine Ausströmöffnung vorzusehen. Auch die Abmessungen und die Materialien können anders gewählt werden.

Die Beutelwand des Staubsaugerfilterbeutels kann beispielsweise einen Aufbau, wie in der EP 0 960 645 beschrieben, aufweisen. Insbesondere kann eine Grobfilterschicht, beispielsweise aus einem Meltblown, in Strömungsrichtung aus dem Innern des Beutels nach außen vor einer Feinfilterschicht, beispielsweise ebenfalls aus einem Meltblown, angeordnet sein. Zusätzlich können in der Filterstruktur noch weitere Schichten vorgesehen sein, beispielsweise Stützschichten und/oder geruchsabsorbierende Schichten.

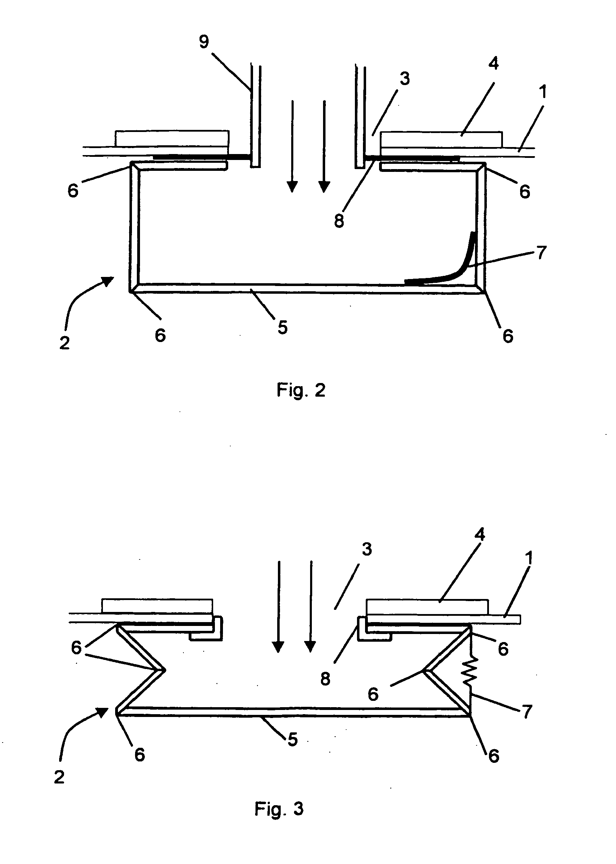

Figur 2 zeigt schematisch ein weiteres Ausführungsbeispiel einer erfindungsgemäßen Ablenkvorrichtung. Gleiche Elemente wie in Figur 1 sind mit gleichen Bezugszeichen versehen.

Die in Querschnittsansicht gezeigte Ablenkvorrichtung ist hier wieder in Form eines Quaders ausgebildet. In dem gezeigten Ausführungsbeispiel sind die senkrecht zur Grundfläche 5 (Ablenkfläche oder Prallplatte) stehenden Seitenflächen vorne und hinten offen, um als Ausströmöffnungen zu dienen. An den Kanten zwischen der Prallplatte und den beiden Seitenflächen bzw. zwischen den Seitenflächen und der oberen Fläche mit der Einströmöffnung sind Falzlinien 6 vorgesehen, die ein Zusammenlegen der Ablenkvorrichtung ermöglichen, um die Ausdehnung der Ablenkvorrichtung senkrecht zur Ebene der Einströmöffnung zu verkleinern. Damit lassen sich entsprechend ausgerüstete Staubsaugerfilterbeutel in diese Stellung in kompakter Weise zusammenlegen und transportieren.

In dem gezeigten Beispiel ist weiterhin ein (optionales) Federelement 7 vorgesehen, das hier in Form einer Biegefeder ausgebildet ist. Falls ein Saugluftstrom vorhanden ist, indem beispielsweise Luft angesaugt und somit im Beutelinnern ein Unterdruck erzeugt wird, wird die Ablenkvorrichtung entgegen der Rückstellkraft der Biegefeder 7 auseinander geklappt und nimmt ihre quaderförmige Gestalt an. Bei schwachem oder verschwinden dem Saugluftstrom wirkt die Biegefeder 7 derart, dass die Seitenflächen und die Grundfläche 5 zur Seite (in der gezeigten Ansicht nach links) geklappt werden, sodass die Ablenkvorrichtung flach zusammengelegt 5 wird. Im flach zusammengelegten Zustand liegt dann die rechte Seitenfläche im Wesentlichen in einer Ebene mit der Grundfläche 5. Die Biegefeder 7 kann beispielsweise mit der Grundfläche und der rechten Seitenfläche verklebt sein.

Eine derart zusammenlegbare Ablenkvorrichtung kann insbesondere auch dazu dienen, die Einströmöffnung und die Einlassöffnung sicher zu verschließen. Damit erübrigt sich ein weiteres Verschlusselement an der Halteplatte 4.

Alternativ zu der Biegefeder kann beispielsweise auch ein Permanentmagnet in oder an der Halteplatte 4 und ein ferromagnetisches Element in oder an einer der Seitenflächen oder der Grundfläche 5 vorgesehen sein. Damit wird ebenfalls eine Rückstelleinrichtung gebildet, die ein Zusammenlegen der Ablenkvorrichtung bei nachlassendem Saugluftstrom ermöglicht.

Zusätzlich kann, wie in dem Beispiel gezeigt ist, ein Dichtungselement 8 vorgesehen sein, das hier zwischen der Ablenkvorrichtung und der Beutelinnenseite angeordnet ist. Alternativ kann das Dichtungselement auch innerhalb der Ablenkvorrichtung an der oberen Fläche, in der sich die Einströmöffnung befindet, angeordnet sein. Das Dichtungselement ist um die gesamte Einlassöffnung herum vorgesehen. Durch dieses Dichtungselement wird insbesondere eine geeignete Abdichtung nach Einführen eines Stutzens 9, der mit dem Staubsaugerschlauch verbunden ist, erzielt.

Ein weiteres Ausführungsbeispiel ist schematisch in Figur 3 gezeigt. In diesem Ausführungsbeispiel kann die Ablenkvorrichtung nach Art einer Ziehharmonika zusammengelegt werden. Hier weisen die beiden links und rechts angeordneten Seitenflächen jeweils in ihrer Mitte eine parallel zur Grundfläche verlaufende Falzlinie auf, an der die Seitenfläche geknickt werden kann. Auch hier ist ein Federelement 7 vorgesehen, auf Grund dessen Rückstellkraft die beiden Seitenflächen zusammenfalten und die Grundfläche 5 sich in Richtung Einlassöffnung bewegt. Das Federelement kann beispielsweise auch in eine der Seitenflächen integriert sein.

In dem hier gezeigten Ausführungsbeispiel ist das Dichtungselement 8 aus einem Schaum. Dieser Schaum ist zwar im Innern der Ablenkvorrichtung aufgebracht, ragt aber in der Einströmöffnung in Richtung der Einlassöffnung. Durch ein derartig angeordnetes Dichtungselement wird nicht nur ein eingeführter Stutzen abgedichtet; weiterhin wird auch die Einströmöffnung in zusammengelegtem Zustand der Ablenkvorrichtung in vorteilhafter Weise abgedichtet. Auch hier ist das Dichtungselement um die gesamte Einströmöffnung und Einlassöffnung herum angeordnet.

In den zuvor gezeigten Beispielen kann die Ablenkvorrichtung in unterschiedlicher Weise mit der Beutelinnenseite verbunden sein. Gemäß einer Möglichkeit wird die Ablenkvorrichtung mit der Beutelinnenwand verklebt. Alternativ kann die Oberseite einer Ablenkvorrichtung, die beispielsweise aus Pappe ist, mit PE beschichtet sein, sodass bei einem Anschweißen einer PE-Halteplatte mittels Ultraschall auch gleichzeitig die Ablenkvorrichtung mit der Beutelwand verschweißt wird.

Alternativ zu der beschriebenen Quadergestalt kann die Ablenkvorrichtung auch keilförmige oder keilähnliche Gestalt aufweisen. Insbesondere kann Ablenkvorrichtung wie ein verkleinerter Filterbeutel mit Klotzboden ausgebildet sein, allerdings ohne eigene Halteplatte oder ähnlichem. Bei dieser Form ist der Klotzboden mit Einströmöffnung mit der Beutelinnenseite des Staubsaugerfilterbeutels verbunden; in die beiden schmalen Seitenflächen der Ablenkvorrichtung sind an der Keilspitze jeweils zwei Löcher als Ausströmöffnungen geschnitten. Auf diese Weise wird die eintretende Luft durch die breiten Seitenflächen und den Wickelfalz mit der Verbindungskante bzw. der im Bereich des Wickelfalzes gebildeten Fläche durch die Ausströmöffnungen abgelenkt. Der Vorteil dieser Gestalt der Ablenkvorrichtung besteht darin, dass sie ebenfalls in einfacher Weise zusammengelegt werden kann.

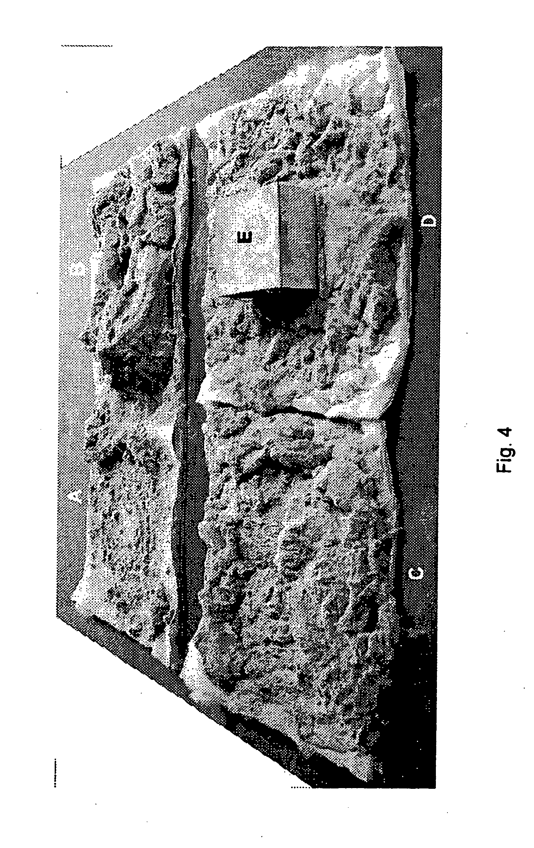

Die vorteilhaften Auswirkungen einer Ablenkvorrichtung gemäß der vorliegenden Erfindung sind in Figur 4 gezeigt. Zu sehen sind zwei aufgeschnittene Flachbeutel, die zuvor mit 400 g Prüfstaub (DMT-Prüfstaub Typ 8 der Deutschen Montan Technologie GmbH) beladen wurden.

Der im Hintergrund der Figur angeordnete Staubsaugerfilterbeutel weist keine Ablenkvorrichtung auf. Die mit A bezeichnete Seite des Beutels ist die Anströmseite, d. h. die Seite, auf der der eingetretene Luftstrom im Innern des Beutels auftrifft. Die mit B bezeichnete Seite weist die Einlassöffnung auf, wie in der Mitte dieser Seite B zu erkennen ist. Für diesen Fall ohne Ablenkvorrichtung ist deutlich zu erkennen, dass der Filterkuchen zum größten Teil auf der einströmseitigen Beutelinnenwand liegt. Auf der gegenüberliegenden Seite hat sich fast kein Filterkuchen abgelagert.

Im Vordergrund der Figur ist ein ebenfalls am umlaufenden Rand aufgetrennter Flachbeutel mit einer erfindungsgemäßen Ablenkvorrichtung gezeigt. Die Anströmseite bzw. Unterseite des Beutels ist mit C bezeichnet, die Oberseite mit der Einlassöffnung mit D. An der Einlassöffnung ist eine quaderförmige Ablenkvorrichtung aus Pappe angeordnet. Diese Ablenkvorrichtung weist zwei gegenüberliegende Ausströmöffnungen auf, die jeweils die gesamte linke bzw. rechte Seitenfläche (in der gezeigten Ansicht) einnehmen. Die Ablenkvorrichtung hat die oben genannten Maße 7,5 cm x 8 cm x 3cm.

Die Staubbeladung wurde auch hier mit der gleichen Menge an Prüfstaub (DMT Typ 8) durchgeführt. Wie man unmittelbar erkennen kann, ist der Filterkuchen in diesem Fall gleichmäßig über die gesamte Beutelinnenwand, sowohl auf der Ober- als auch auf der Unterseite, bedeckt. Damit wirkt der Filterkuchen selbst auch als Filter und ermöglicht eine gleichmäßige Einlagerung von Feinstaubpartikeln.

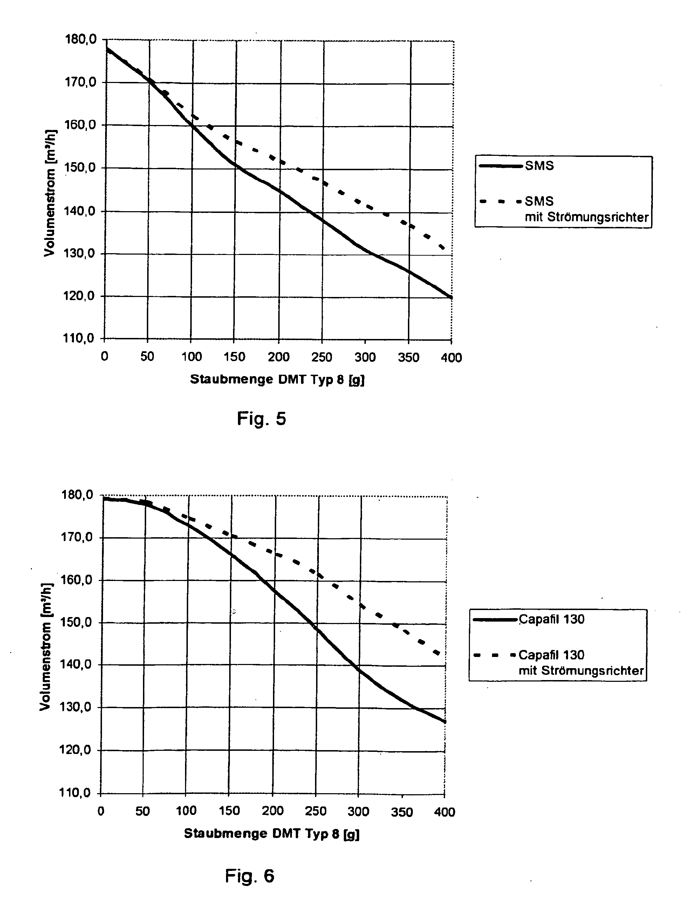

Das Ergebnis dieser verbesserten Verteilung des Filterkuchens ist außerdem in der Grafiken gemäß Figur 5 und 6 illustriert. In beiden Fällen wurde ein Filterbeutel einmal ohne und einmal mit einer Ablenkvorrichtung gemäß der vorliegenden Erfindung untersucht. Das Untersuchungsverfahren wurde wie folgt durchgeführt.

Als Staubsauger wurde ein Miele Performance 2300 vom Typ HS 05 (Modell S749, Nr. 71683038) verwendet, der auf maximale Leistung gestellt war. Neben dem unter suchten Filterbeutel waren noch der vorgesehene Ausblasfilter und Motorschutzfilter vorhanden. Die untersuchten Staubsaugerfilterbeutel hatten eine Flachgestalt und wiesen Abmessungen von 295 x 270 mm auf. Die Ablenkvorrichtung hatte eine Quadergestalt, wie in Figur 4 gezeigt, mit einer Höhe von 30 mm, einer Breite von 75 mm und einer Länge von 80 mm. Zwei der Seitenflächen mit den Abmessungen 75 mm x 30 mm waren offen und dienten als Ausströmöffnungen. Als Prüfstaub wurde DMT Typ 8 verwendet.

Nach einem Warmlaufen des Staubsaugers für 10 Minuten wurde der zu prüfende Filterbeutel eingebaut. Der Volumenstrom (in m³/h) ohne Staubbeladung wurde nach 1 Minute Laufzeit des Gerätes gemessen. Anschließend wurde eine erste Staubportion von 50 g innerhalb von 30 s eingesaugt und dann der Volumenstrom nach 1 Minute gemessen. Dieser Schritt wurde für die folgenden Staubzugaben entsprechend wiederholt bis 400 g Staub zugegeben worden sind.

Das für Figur 5 verwendete Filtermedium war ein SMS (Spunbond/Meltblown/Spunbond), wobei die Spunbonds ein Flächengewicht von 17 g/m² und das Meltblown ein Flächengewicht von 24 g/m² aufwiesen.

Bei dem für Figur 6 verwendeten Filtermedium handelt es sich um das Medium Capafil 130 (Stand 2005), das von dem Unternehmen Airflo N.V. erhältlich ist. Es hat den Aufbau: Spinvlies (17 g/m²), Volumenvlies (130 g/m²), Spinnvlies (17 g/m²), Meltblown (24 g/m²), Spinnvlies (24 g/m²).

Aus bei den Grafiken ist klar erkennbar, dass der Volumenstrom signifikant langsamer abnimmt, wenn eine Ablenkvorrichtung gemäß der vorliegenden Erfindung eingesetzt wird. Dies bedeutet, dass damit ein Filterbeutel mit einer geringeren Verstopfungsneigung und somit einer verbesserten Standzeit bei ausgezeichneten Filtereigenschaften erhalten wird.

Erfindungsgemäß ist die Ablenkvorrichtung in Form eines breiten Streifens aus einem trocken- oder nassgelegten Vlies oder Papier, insbesondere Pappe, oder einer Folie ausgebildet.

## Patentansprüche

1. Staubsaugerfilterbeutel (1) mit einer Einlassöffnung (3) und einer im Bereich der Einlassöffnung (3) angeordneten Ablenkvorrichtung (2), die derart ausgebildet ist, dass ein durch die Einlassöffnung (3) eintretender Luftstrom ablenkbar ist, und die Ablenkvorrichtung (2) zum Aufteilen des Luftstroms in wenigstens zwei Teilströme mit unterschiedlichen Strömungsrichtungen ausgebildet ist **dadurch gekennzeichnet, dass** die Ablenkvorrichtung (2) im Beutelinneren an der Einlassöffnung (3) angeordnet und mit dem Filtermaterial der Staubsaugerfilterbeutelwand verklebt oder verschweißt ist und die Ablenkvorrichtung (2) in Form eines breiten Streifens aus einem trocken- oder nassgelegten Vlies oder Papier oder einer Folie ausgebildet ist .

2. Staubsaugerfilterbeutel (1) nach einem der vorangegangenen Ansprüche, wobei die Ablenkvorrichtung (2) die Einlassöffnung wenigstens teilweise umgebend an der Beutelinnenseite befestigt ist.

3. Staubsaugerfilterbeutel (1) nach einem der vorangegangenen Ansprüche, wobei die Ablenkvorrichtung (2) wenigstens eine der Einlassöffnung (3) gegenüberliegende Ablenkfläche umfasst
und wobei die wenigstens eine Ablenkfläche eine größere Fläche als die Fläche der Einlassöffnung (3) aufweist.

## Claims

1. A vacuum cleaner filter bag (1) with an inlet opening (3) and a deflection device (2) arranged in the area of the inlet opening, which is configured in such a way that an air stream flowing through the inlet opening can be deflected, and the deflection device (2) is configured for dividing the air stream into at least two partial streams with different flow directions,
**characterized in that**
the deflection device (2) is arranged in the interior of the bag at the inlet opening, and the deflection device (2) is glued or welded to the filter material of the vacuum cleaner filter bag wall, wherein the deflection device (2) is configured in form of a broad strip consisting of dry-laid or wet-laid non-wovens or paper or a foil.

2. The vacuum cleaner filter bag (1) according to any one of the preceding claims, wherein the deflection device (2) is fastened to the bag inside, surrounding the inlet opening (3) at least in part.

3. The vacuum cleaner filter bag (1) according to any one of the preceding claims, wherein the deflection device (2) comprises at least one deflection surface opposite the inlet opening (3), wherein the at least one deflection surface has an area larger than the area of the inlet opening (3).

## Revendications

1. Sac d'aspirateur (1) doté d'un orifice d'entrée (3) et d'un dispositif de déviation (2) disposé dans la zone de l'orifice d'entrée (3), qui est configuré de sorte qu'un flux d'air entrant via l'orifice d'entrée (3) peut être dévié, et le dispositif de déviation (2), destiné à diviser le flux d'air en au moins deux flux partiels, est configuré avec différentes directions d'écoulement, **caractérisé en ce que** le dispositif de déviation (2) est disposé à l'intérieur du sac au niveau de l'orifice d'entrée (3) et est collé ou soudé au matériau de filtrage de la paroi du sac d'aspirateur et le dispositif de déviation (2) est configuré sous la forme d'une large bande en non-tissé séché ou humidifié ou en papier ou réalisée dans un film.

2. Sac d'aspirateur (1) selon l'une quelconque des revendications précédentes, le dispositif de déviation (2) étant fixé sur la face intérieure du sac qui entoure au moins partiellement l'orifice d'entrée.

3. Sac d'aspirateur (1) selon l'une quelconque des revendications précédentes, le dispositif de déviation (2) comprenant au moins une surface de déviation opposée de l'orifice d'entrée (3) et l'au moins une surface de déviation présente une surface supérieure à la surface de l'orifice d'entrée (3).
